Europäisches Patentamt

European Patent Office

Office européen des brevets

(11) Veröffentlichungsnummer: **0 393 394**

**A2**

(12) **EUROPÄISCHE PATENTANMELDUNG**

(21) Anmeldenummer: **90105893.3**

(22) Anmeldetag: **28.03.90**

(51) Int. Cl.⁵: **B65G 19/28, B23Q 11/00**

(30) Priorität: **20.04.89 DE 3913019**

(43) Veröffentlichungstag der Anmeldung:
**24.10.90 Patentblatt 90/43**

(84) Benannte Vertragsstaaten:
**DE ES IT**

(71) Anmelder: **Gebr. Hennig GmbH**
**Dorfstrasse 41**
**D-8045 Ismaning(DE)**

(72) Erfinder: **Stöhr, Albert**
**Am Wiegenberg 8**
**D-8015 Markt Schwaben(DE)**
Erfinder: **Rehle, Alfred**
**Pfeuferstr. 33**
**D-8000 München 70(DE)**

(74) Vertreter: **Tetzner, Volkmar, Dr.-Ing. Dr. jur.**
**Van-Gogh-Strasse 3**
**D-8000 München 71(DE)**

(54) **Späneförderer.**

(57) Die Erfindung betrifft einen Späneförderer, der ein mit zwei seitlichen Förderketten versehenes, endlos umlaufendes Transportband sowie ein mit Führungsschienen für diese Förderketten ausgestattetes Gehäuse besitzt, wobei in den oberen Führungsschienen der Förderketten Öffnungen zum Kühlmitteldurchtritt vorgesehen sind. Auf diese Weise ergibt sich eine konstruktiv einfache Fördererausführung, bei der zugeführtes Kühlmittel zuverlässig und rasch seitlich aus dem Bereich des Obertrums (Fördertrum) ablaufen kann.

EP 0 393 394 A2

## Späneförderer

Die Erfindung betrifft einen Späneförderer entsprechend dem Oberbegriff des Anspruches 1.

Späneförderer dieser Art sind aus der Praxis als sogenannte Obertrum-Späneförderer bekannt. Sie werden vor allem bei spanabhebenden Werkzeugmaschinen verwendet, um anfallende Späne abzufördern. Die abzufördernden Späne werden dem Späneförderer insbesondere im Bereich seines nichtangetriebenen hinteren Umlenkabschnittes durch eine dort an der Oberseite angeordnete Öffnung zugeführt, die sich über eine bestimmte Teillänge des Späneförderers erstreckt.

Da zusammen mit den Spänen meistens noch eine große Menge der für die Werkzeugkühlung notwendigen Kühlflüssigkeit in den Späneförderer gelangt, muß dafür Sorge getragen werden, diese Kühlflüssigkeit getrennt von den abzufördernden Spänen ablaufen zu lassen. Zu diesem Zweck ist im allgemeinen im Bereich des hinteren Umlenkabschnittes im Förderergehäuse ein Ablauf vorgesehen, der mit einem entsprechenden Behälter verbunden ist. Wenn bei diesen bekannten Späneförderern das Transportband in Form eines Kratzerförderbandes (mit Kratzerförderleisten) und einem dem Obertrum dieses Förderbandes zugeordneten Förderboden ausgestattet ist, dann sind in diesem Förderboden beispielsweise Ablauföffnungen (ähnlich einem Lochsieb) vorgesehen, durch die die Kühlflüssigkeit nach unten ablaufen kann, während die Späne gesondert abgefördert werden.

Bei diesen bekannten Ausführungen treten jedoch eine Reihe von Schwierigkeiten auf. So kommt es immer wieder vor, daß sich Späne in den Ablauföffnungen für die Kühlflüssigkeit verklemmen und dadurch die Bewegung des Transportbandes behindern oder gar anhalten. Bei zu kleinen Kühlmitteldurchtrittsöffnungen oder auch bei zu großen Kühlmittelmengen wird das Gehäuse des Späneförderers so weit mit Kühlflüssigkeit gefüllt, daß es diese nicht mehr in der erforderlichen Weise aufnehmen und abführen kann. Andererseits besteht jedoch die Forderung, die Bauhöhe eines Späneförderers so niedrig wie möglich zu halten.

Der Erfindung liegt daher die Aufgabe zugrunde, einen Späneförderer der im Oberbegriff des Anspruches 1 vorausgesetzten Art zu schaffen, der sich bei relativ kleinen Querschnittsabmessungen durch eine besonders einfache Konstrukion, einen äußerst zuverlässigen Spänetransport sowie durch ausreichende und unbehinderte Abflußmöglichkeiten für Kühlmittel auszeichnet.

Diese Aufgabe wird erfindungsgemäß durch das im Kennzeichen des Anspruches 1 angegebenen Merkmal gelöst. Vorteilhafte Weiterbildungen und Ausgestaltungen der Erfindung sind Gegenstand der Unteransprüche.

Bei dem erfindungsgemäßen Späneförderer sind die Öffnungen für den Kühlmitteldurchtritt, die zum Abfließen des durch die Späne mitgeschleppten Kühlmittels erforderlich sind, - vollkommen anders als bei den oben erläuterten bekannten Ausführungen - in den beiden seitlich im Gehäuse angeordneten Führungsschienen für die beiden Förderketten vorgesehen, das heißt diese Kühlmitteldurchtrittsöffnungen befinden sich somit auch zu beiden Seiten neben dem eigentlichen, endlos umlaufenden Transportband. Dies hat den Vorteil, daß in dem spänefördernden Bereich des Transportbandes glatte Verschleißbleche (Förderböden) angeordnet werden können, die den abzufördernden Spänen keinerlei Möglichkeiten geben, hängen zu bleiben oder sich zu verklemmen. Ferner sind die Kühlmitteldurchtrittsöffnungen in äußerst vorteilhafter Weise in seitlichen Bereichen, nämlich in den Führungsschienen der Förderketten, so vorgesehen, daß sie nicht mit den abzufördernden Spänen in Berührung kommen können und somit stets für einen ungehinderten und ausreichenden Abfluß des Kühlmittels (Kühlflüssigkeit) zwischen den Kratzerförderleisten in den unteren Bereich der ganzen Späneaufgabelänge des Gehäuses Sorge tragen können, von wo aus das Kühlmittel in üblicher Weise abgezogen werden kann.

Da durch die erfindungsgemäßen Maßnahmen das Kühlmittel seitlich des eigentlichen Transportbandes und auch zweckmäßig seitlich (nach außen) der beiden Förderketten ungehindert ablaufen kann, besteht auch keinerlei Gefahr, daß dieser erfindungsgemäße Obertrum-Späneförderer zu stark mit Kühlmittel angefüllt werden kann, so daß die Querschnittsabmessungen des Förderergehäuses, insbesondere dessen Bauhöhe bei ungehindert guter Förderfunktion und -leistung relativ klein gehalten werden können.

Die Führungsschienen für jedes Obertrum der beiden Förderketten verlaufen vorzugsweise etwa im Bereich einer im wesentlichen vertikalen Seitenwand des Gehäuses. Jede Führungsschiene ist dabei erfindungsgemäß durch einen im Querschnitt mehrfach abgebogenen Teil, insbesondere einen mehrfach abgekanteten Metallblechteil gebildet, und sie weist einen etwa rechtwinklig zur zugehörigen Gehäuseseitenwand ausgerichteten, flachen Führungsabschnitt auf, auf dem sich die Förderkette entlangbewegt und an dessen gehäuseinnerem Rand ein gegen das Untertrum des Transportbandes abgebogener Halterungsabschnitt vorgesehen ist, der ein auswechselbar befestigtes Verschleißblech unter Bildung eines Förderbodens für das Transportband-Obertrum trägt. Jede Führungsschiene kann somit bevorzugt durch ein äußerst einfach herzustellendes Blechprofil gebildet sein.

Die Kühlmittel-Durchtrittsöffnungen können in einer ersten Ausführungsform in den der zugehörigen Gehäuseseitenwand benachbarten Randbereichen der flachen Führungsabschnitte der Führungsschienen eingearbeitet sein, das heißt - im Querschnitt durch den Späneförderer gesehen - befinden sich die Kühlmitteldurchtrittsöffnungen gegenüber den Rollen der Förderketten so weit nach außen versetzt, daß diese Durchtrittsöffnungen den ruhigen und einwandfreien Lauf der Förderketten nicht beeinträchtigen können.

An dem der zugehörigen Gehäuseseitenwand benachbarten äußeren Rand des flachen Führungsabschnittes jeder Führungsschiene kann aber auch ein - im Querschnitt betrachtet - schenkelartig nach oben gebogener Wandteil vorgesehen sein, der einen lichten Abstand von der Gehäuseseitenwand besitzt und in den die Kühlmitteldurchtrittsöffnungen eingearbeitet sind. Diese besonders weit nach außen verlegte, aber einen genügenden Abstand zur entsprechenden Gehäuseseitenwand einhaltende Anordnung der Durchtrittsöffnungen gewährleistet einen besonders zuverlässigen spänefreien Abfluß des Kühlmittels aus dem Förderbereich des Obertrums.

Die Erfindung sei nachfolgend anhand der Zeichnung näher erläutert. In dieser Zeichnung zeigen

Fig.1 eine Längsschnittansicht (Schnittführung etwa entlang der Linie I-I in Fig.2) durch den hinteren (nicht angetriebenen) Umlenkabschnitt des Späneförderers;

Fig.2 eine Teil-Querschnittsansicht durch diesen Umlenkabschnitt (Schnittlinie II-II in Fig.1);

Fig.3 eine Teil-Ansicht (von innen) einer Führungsschiene für das Obertrum einer Rollenkette;

Fig.4 eine Teil-Querschnittsansicht entlang der Linie IV-IV in Fig.1, zur Erläuterung von Umlenkscheiben für die Rollenketten;

Fig.5 eine Teil-Grundrißansicht entlang der Linie V-V in Fig.1.

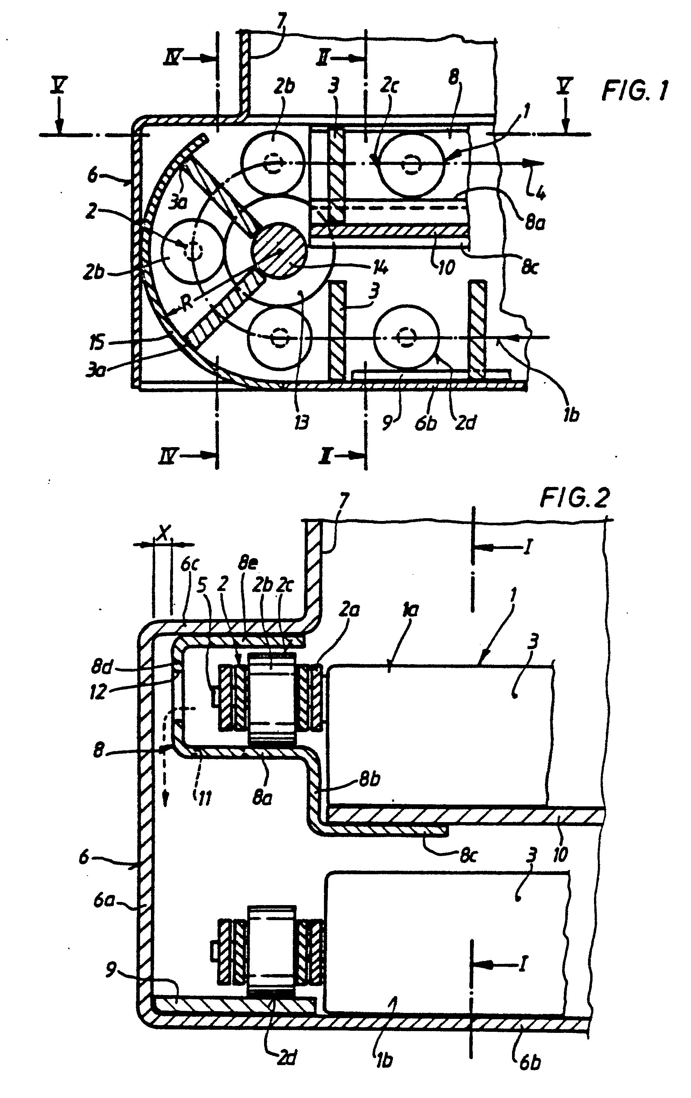

Von dem Späneförderer sind in der zum Teil vereinfachten Zeichnung in erster Linie nur die Teile und Merkmale veranschaulicht, die zur Erläuterung der vorliegenden Erfindung von Bedeutung sind. Aus diesem Grunde ist von dem erfindungsgemäßen Obertrum-Späneförderer vor allem auch der in der Regel nicht angetriebene, hintere Umlenkabschnitt veranschaulicht, in dem sich die Zuführöffnung für abzufördernde Späne und von ihnen mitgeführte Kühlflüssigkeit befindet. Die Gesamtlänge und Führung des Späneförderers kann den jeweiligen Gegebenheiten angepaßt sein, wobei der Querschnitt des Späneförderers über den größten Teil seiner Länge ansonsten etwa der Darstellung in Fig.2 entspricht. Der diesem nicht angetriebenen Umlenkabschnitt entgegengesetzte Umlenkabschnitt (Endabschnitt bzw. Kopfende) kann in an sich bekannter Weise ausgeführt sein und dabei den Antrieb für die Rollenketten sowie den Späneauslauf enthalten.

Der allgemeine Aufbau dieses Obertrum-Späneförderers sei zunächst anhand der Fig.1 und 2 erläutert. Demnach enthält der Späneförderer ein Transportband, das im vorliegenden Beispiel durch ein Kratzerförderband 1 üblicher Ausführung gebildet sein kann. Dieses Kratzerförderband 1 ist in üblicher Weise mit zwei angetriebenen, seitlichen Förderketten 2 versehen, die in Form von an sich bekannten Laschenketten ausgeführt sind und zwischen denen Kratzerförderleisten 3 befestigt sind. Diese Kratzerförderleisten sind mit entsprechenden Abständen entlang der Förderketten 2 angebracht und verlaufen aufrecht und quer zur allgemeinen Förderrichtung gemäß Pfeil 4. Mit ihren Querenden sind die Kratzerförderleisten 3 an entsprechenden Innenlaschen 2a der Förderketten 2 beweglich befestigt. Zwischen inneren und äußeren Laschenpaaren befinden sich die auf Rollenbolzen 5 umlaufenden Büchsen oder Rollen 2b.

Das mit seinen Rollenketten 2 endlos umlaufende Transport band 1 bildet in seinem Obertrum 1a das Fördertrum.

Dieser Späneförderer enthält ferner ein Gehäuse 6, das einen im wesentlichen rechteckigen Querschnitt mit zwei etwa vertikalen Seitenwänden 6a, einem im wesentlichen ebenen Boden 6b und einer Deckwand 6c aufweist. Im Bereich des in der Zeichnung in der Hauptsache veranschaulichten hinteren Umlenkabschnittes dieses Späneförderers erstreckt sich über eine ausreichend große Länge eine Spänezuführöffnung 7, über die neben abzufördernden Spänen auch eine mehr oder weniger große Menge an Kühlflüssigkeit zugeführt wird und die die Späneaufgabelänge bildet.

Innerhalb des Gehäuses 6 sind in der Nähe der beiden Seitenwände 6a sowie im oberen Abschnitt Führungsschienen 8 für die beiden Förderketten 2 vorgesehen, um jeweils das Obertrum 2c der beiden Rollenketten 2 in Längsrichtung (abstützend) zu führen, wobei die Rollen 2b dieser Rollenketten 2 auf entsprechenden Führungsflächen entlanglaufen (abrollen). Auch für das Untertrum 2d jeder Rollenkette 2 können Führungsschienen 9 vorgesehen sein, die in Form von flachen Führungsleisten am Boden 6b des Gehäuses vorgesehen sein können.

Von besonderem Interesse ist bei diesem Späneförderer zunächst einmal die Ausführung und Anordnung der Führungsschienen 8 für die Obertrums 2c der beiden Rollenketten 2. Jede Führungsschiene 8 ist dabei durch einen im Querschnitt mehrfach abgebogenen Teil, insbesondere mehrfach abgekanteten Metallblechteil oder Ziehprofil gebildet, wie es insbesondere in Fig.2 dargestellt ist. Danach besitzt jede obere Führungsschiene 8 zunächst einmal einen etwa rechtwinklig zur zugehörigen Seitenwand 6a ausgerichteten, flachen Führungsabschnitt 8a, auf dem die Rollen 2b der Rollenketten 2 entlanglaufen. Am gehäuseinneren Rand dieses flachen Führungsabschnittes 8a ist ferner ein gegen das Untertrum 1b des Transportbandes 1 im wesentlichen rechtwinklig abgebogener Halterungsabschnitt 8b vorgesehen, von dem wiederum ein Randstreifen 8c etwa rechtwinklig in Richtung auf das Gehäuseinnere abgebogen ist. Mit diesem Randstreifen 8c trägt der Halterungsabschnitt 8b jeder Führungsschiene 8 ein Verschleißblech 10, auf das weiter unten noch näher eingegangen wird. Wichtig ist vielmehr, daß jede obere Führungsschiene 8 mit Öffnungen 11 bzw. 12 zum Kühlmitteldurchtritt versehen ist.

Diese Kühlmitteldurchtrittsöffnungen 11 bzw. 12 sind generell zunächst einmal seitlich außerhalb der Rollen 2b bzw. der Rollenketten 2 in diesen Führungsschienen 8 vorgesehen.

Wie in Fig.2 gestrichelt angedeutet ist, können die Durchtrittsöffnungen 11 für das Kühlmittel bzw. die Kühlflüssigkeit in den der zugehörigen Gehäuseseitenwand 6a benachbarten Randbereich des flachen Führungsabschnittes 8a jeder Führungsschiene 8 eingearbeitet sein.

Wie Fig.2 ferner zeigt, ist an dem der zugehörigen Gehäuseseitenwand 6a benachbarten äußeren Rand des flachen Führungsabschnittes 8a jeder Führungsschiene 8 ein - im Querschnitt betrachtet - schenkelartig nach oben gebogener Wandteil 8d in Form einer Stegwand vorgesehen. Dieser Wandteil 8d besitzt einen ausreichend lichten Abstand X von der zugehörigen Gehäuseseitenwand 6a, und in diesem Wandteil 8d jeder Führungsschiene 8 sind seitliche (obere) Kühlmittel-Durchtrittsöffnungen 12 eingearbeitet. Der lichte Abstand X zwischen Wandteil 8d und Gehäuseseitenwand 6a ist so bemessen, daß aus diesen oberen Durchtrittsöffnungen 12 austretende Kühlflüssigkeit ungehindert nach unten ablaufen kann.

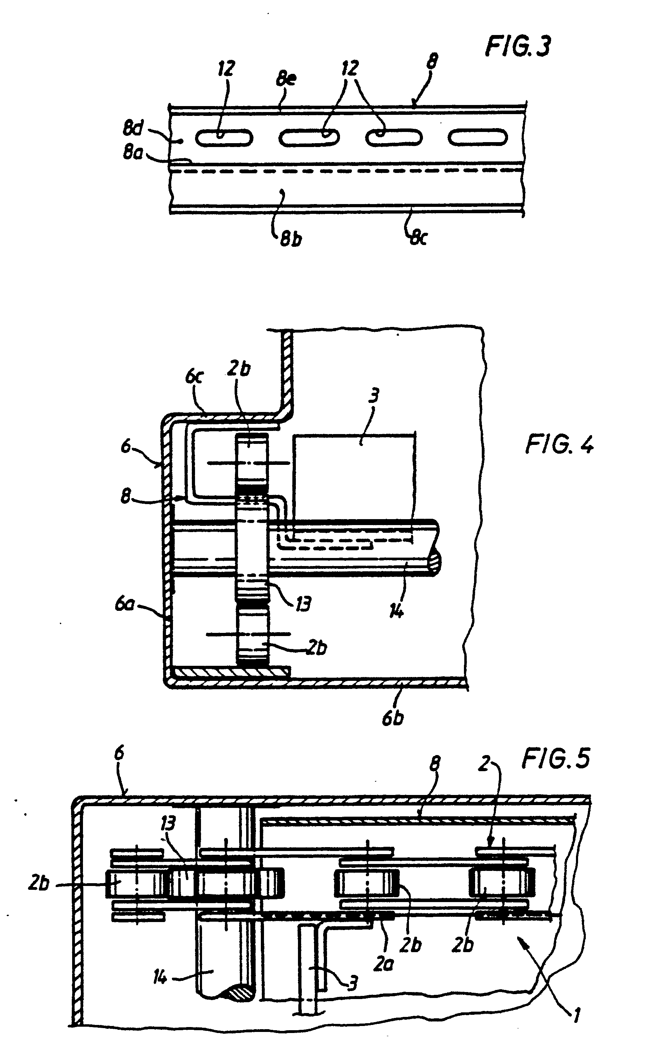

Wie die Kühlmitteldurchtrittsöffnungen 12 im Wandteil 8d der Führungsschienen 8 angeordnet sein können, veranschaulicht Fig.3 (in einer Teilansicht einer Führungsschiene 8 vom Gehäuseinnern her). Danach können die Öffnungen 12 in Form von ausreichend großen Langlochöffnungen in zumindest einer Reihe mit gleichen Abständen hintereinander angeordnet sein. Selbstverständlich können die Kühlmitteldurchtrittsöffnungen auch durch einfache runde Löcher oder dergleichen ausgebildet und in mehr als einer Längsreihe angeordnet sein. Gleiches trifft auch auf die Ausführung und Anordnung der unteren Durchtrittsöffnungen 11 im flachen Führungsabschnitt 8a jeder Führungsschiene 8 zu.

Bei diesem insbesondere in Fig.2 veranschaulichten Ausführungsbeispiel wird es ferner vorgezogen, daß der nach oben gebogenen Wandteil 8d mit seinem oberen Rand am Gehäuse 6, und zwar direkt an der Deckwand 6c befestigt ist. Zu diesem Zweck besitzt der nach oben gebogene Wandteil 8d jeder Führungsschiene 8 an seinem oberen Rand noch eine etwa rechtwinklig nach innen abgebogene Befestigungsleiste 8e, die entweder fest mit der Gehäusedeckwand 6c verschweißt, vernietet oder verschraubt sein kann, um die ganze Führungsschiene 8 sicher zu haltern.

Wie bereits weiter oben erwähnt worden ist, tragen die nach unten abgebogenen Halterungsabschnitte 8b der beiden Führungsschienen 8 auf ihren einwärts gebogenen Randstreifen 8c ein Verschleißblech 10. Dieses Verschleißblech 10 ist unter Bildung eines im Querschnitt etwa flach-trogförmigen Förderbodens für das Transportband-Obertrum 1a von oben her auswechselbar auf den leistenartig abgekanteten Randstreifen 8c befestigt. Das so abgestütze Verschleißblech 10 kann dabei vorzugsweise mit den Randstreifen 8c verschraubt sein, so daß im Bedarfs falle, beispielsweise zwecks Zugänglichkeit zum Bereich des Untertrums vom Transportband 1 oder zwecks Reinigung, gelöst und nach oben aus dem Gehäuse 6 herausgenommen werden kann.

Es sei noch darauf hingewiesen, daß es vielfach bereits ausreichend sein kann, die Führungsschienen 8 nur in dem Längsabschnitt mit Kühlmitteldurchtrittsöffnungen in der erläuterten Weise zu versehen, in dem das Kühlmittel bzw. die Kühlflüssigkeit dem Späneförderer zugeführt wird. Dies trifft insbesondere für den Längsabschnitt mit der Spänezuführöffnung 7 sowie für den Bereich des nicht angetriebenen hinteren Umlenkabschnittes zu, von dem in Fig.1 vor allem das hintere Ende veranschaulicht ist.

Wie sich den Fig.1, 4 und 5 entnehmen läßt, sind zur Führung und Umlenkung der Rollenketten 2 in diesem hinteren Umlenkabschnitt zwei Umlenkscheiben 13 mit Abstand voneinander auf einer festen Achse 14 befestigt. Diese Umlenkscheiben 13 schließen mit ihren Außenumfangsflächen an die Führungsschienen 8, d.h. insbesondere an deren flache Führungsabschnitte 8a an. Die beiden Umlenkscheiben 13 sind daher mit so großem axialen Abstand auf der Achse 14 befestigt, vorzugsweise angeschweißt, daß dank ihren entsprechenden Außenumfangsabschnitten die Rollen 2b der zugehörigen Rollenkette 2 entlanglaufen (abrollen) und dabei die Rollenketten 2 aus ihrem Untertrum 2d in ihr Obertrum 2c umgelenkt werden können. Bei den Umlenkscheiben 13 handelt es sich zweckmäßig um gehärtete Scheiben (zweckmäßig Stahlscheiben).

Vergleicht man somit diesen nicht angetriebenen hinteren Umlenkabschnitt des Späneförderers mit allgemein aus der Praxis bekannten Ausführungsformen, dann ist festzustellen, daß die hier verwendeten Umlenkscheiben 13 die bei den bekannten Späneförderern verwendeten Umlenkkettenräder oder kugelgelagerten Stützrollen-Umlenkungen ersetzen. Dies bringt nicht nur eine erhebliche Kosteneinsparung mit sich (einfachere Konstruktion), sondern ermöglicht auch eine besonders günstige, raumsparende bzw. Höhengestaltung des Fördererquerschnittes.

Bei dem bisher beschriebenen Obertrum-Späneförderer ist es ferner vorteilhaft, wenn das Gehäuse 6 im Bereich der hinteren Umlenkscheiben 13 ein bündig unten an den Gehäuseboden 6b anschließendes, nach oben gebogenes Umlenkblech 15 aufweist. Dieses Umlenkblech 15 besitzt einen gleichbleibenden Biegeradius R, der dem von den Außenkanten 3a der Kratzerförderleisten 3 bei der Kratzerförderband-Umlenkung beschriebenen Umlenkradius entspricht (vgl. Fig.1). Dieses Umlenkblech 15 erstreckt sich nach oben vorzugsweise bis in den Bereich der Spänezuführöffnung 7, d.h. so weit, daß durch die Kratzerförderleisten 3 des Kratzerförderbandes 1 im unteren Trum 1b eventuell mit zurückgeführter Schmutz oder dergleichen (auch eventuell Späneteile) entlang diesem Umlenkblech 15 gewissermaßen nach oben geschaufelt und in den Bereich des Verschleißbleches 10 zurückgeführt werden kann. Durch die Ausbildung und Anordnung dieses Umlenkbleches 15 können sich an diesem hinteren Ende des veranschaulichten Umlenkabschnittes keinerlei Schmutzteile, Spänereste usw. ansammeln, sondern sie werden auf das Verschleißblech 10 und somit zum als Fördertrum wirkenden Obertrum 1a des Kratzerförderbandes 1 zurückgeführt, um sie zuverlässig mit den frisch zugeführten Spänen abzufördern. Dieses Umlenkblech 15 bringt somit einen äußerst vorteilhaften Reinigungseffekt für den Bereich des Untertrums 1b des Kratzerförderbandes 1 mit sich.

Schließlich sei noch der Vollständigkeit halber erwähnt, daß bei diesem Obertrum-Späneförderer die geschilderten Vorteile vor allem dann voll zur Geltung kommen, wenn das Transportband in Form eines Kratzerförderbandes -wie anhand der Zeichnung erläutert - ausgeführt ist. Eine Reihe der geschilderten Vorteile, d.h. vor allem das günstige seitliche Abfließen von Kühlflüssigkeit durch in den oberen Führungsschienen 8 vorgesehene Durchtrittsöffnungen (11 bzw. 12), läßt sich jedoch auch erzielen, wenn das Transportband in Form eines mit zwei seitlichen Rollenketten versehenen Glieder- bzw. Plattentragbandes ausgeführt ist.

**Ansprüche**

1. Späneförderer, enthaltend
a) ein mit zwei angetriebenen seitlichen Förderketten (2) versehenes, endlos umlaufendes Transportband (1), dessen Obertrum (1a) ein Fördertrum bildet, sowie
b) ein mit Führungsschienen (8) für die Förderketten (2) ausgestattetes Gehäuse (6),
dadurch gekennzeichnet, daß
c) die Führungsschienen (8) für das Obertrum (2c) jeder Förderkette (2) mit Öffnungen (11, 12) zum Kühlmitteldurchtritt versehen sind.

2. Späneförderer, wobei jede Führungsschiene im Bereich einer im wesentlichen vertikalen Seitenwand des Gehäuses verläuft, dadurch gekennzeichnet, daß jede Führungsschiene (8) durch einen im Querschnitt mehrfach abgebogenen Teil, insbesondere einen mehrfach abgekanteten Metallblechteil oder ein mehrfach abgebogenes Ziehprofil, gebildet ist und einen etwa rechtwinklig zur zugehörigen Seitenwand (6a) ausgerichteten, flachen Führungsabschnitt (8a) aufweist, auf dem sich die Förderketten (2) entlangbewegen und an dessen gehäuseinnerem Rand ein gegen das Untertrum (1b) des Transportbandes (1) abgebogener Halterungsabschnitt (8b) vorgesehen ist, der ein auswechselbar befestigtes Verschleißblech (10) unter Bildung eines Förderbodens für das Transportband-Obertrum trägt.

3. Späneförderer nach Anspruch 2, dadurch gekennzeichnet, daß die Kühlmitteldurchtrittsöffnungen (11) in den der zugehörigen Gehäuseseitenwand (6a) benachbarten Randbereich des flachen Führungsabschnittes (8a) jeder Führungsschiene (8) eingearbeitet sind.

4. Späneförderer nach Anspruch 2, dadurch gekennzeichnet, daß an dem der zugehörigen Gehäuseseitenwand (6a) benachbarten äußeren Rand des flachen Führungsabschnittes (8a) jeder Führungsschiene (8) ein - im Querschnitt betrachtet - schenkelartig nach oben gebogener Wandteil (8d) vorgesehen ist, der einen lichten Abstand (X) von der Gehäuseseitenwand besitzt und in dem die Kühlmitteldurchtrittsöffnungen (12) vorgesehen sind.

5. Späneförderer nach Anspruch 4, dadurch gekennzeichnet, daß der nach oben gebogene Wandteil (8d) mit seinem oberen Rand (8e) am Gehäuse (6) befestigt ist.

6. Späneförderer nach Anspruch 2, dadurch gekennzeichnet, daß der nach unten abgebogene Halterungsabschnitt (8b) jeder Führungsschiene (8) an seinem unteren Ende einen leistenförmig abgekanteten Randstreifen (8c) aufweist, auf dem das Verschleißblech (10) abgestützt und lösbar befestigt, vorzugsweise aufgeschraubt ist.

7. Späneförderer nach Anspruch 1, dadurch gekennzeichnet, daß die Führungsschienen (8) insbesondere im Bereich des nicht angetriebenen Umlenkabschnittes des Späneförderers sowie der dort in der Gehäusedeckwand (6c) angeordneten Spänezuführöffnung (7) mit den Kühlmitteldurchtrittsöffnungen (11, 12) versehen sind.

8. Späneförderer nach Anspruch 7, dadurch gekennzeichnet, daß zur Führung und Umlenkung der Förderketten (2) in diesem Umlenkabschnitt Umlenkscheiben (13) vorgesehen sind, die auf einer festen Achse (14) befestigt sind und deren Außenumfangsflächen an die Führungsschienen (8) anschließen.

9. Späneförderer nach Anspruch 8, dadurch gekennzeichnet, daß die Umlenkscheiben (13) gehärtete Stahlscheiben sind, deren axiale Breite im wesentlichen der Breite der Förderketten, insbesondere der Rollen (2b) von Rollenketten (2) angepaßt ist.

10. Späneförderer nach Anspruch 8, dadurch gekennzeichnet, daß das endlos umlaufende Transportband (1) mit zwischen den beiden Förderketten (2) befestigten Kratzerförderleisten (3) versehen ist und daß das Gehäuse (6) im Bereich der Umlenkscheiben (13) ein bündig unten an den Gehäuseboden (6b) anschließendes, nach oben gebogenes Umlenkblech (15) aufweist, dessen gleichbleibender Biegeradius (R) dem von den Außenkanten (3a) der Kratzerförderleisten (3) bei der Transportband-Umlenkung beschriebenen Umlenkradius entspricht und das sich nach oben bis in den Bereich der Spänezuführöffnung (7) erstreckt.

FIG. 1

FIG.2

FIG.3

FIG. 4

FIG.5